(19) Europäisches Patentamt
European Patent Office
Office européen des brevets

(11) **EP 3 118 984 A1**

(12) **EUROPEAN PATENT APPLICATION**

(43) Date of publication:
**18.01.2017 Bulletin 2017/03**

(51) Int Cl.:
*H02M 5/45* (2006.01)    *H01G 4/38* (2006.01)
*H02J 7/34* (2006.01)

(21) Application number: **15176817.3**

(22) Date of filing: **15.07.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Siemens Aktiengesellschaft**
**80333 München (DE)**

(72) Inventor: **Perera, Aravinda**
**7037 Trondheim (NO)**

(54) **CAPACITOR BANK**

(57)    Field of the invention
A capacitor bank (100) including plural capacitors is provided. In the capacitor bank (100), plural multilayer capacitors are connected in parallel between a first and a second DC terminal (21, 22). The capacitor bank (100) has at least two capacitor strings (11, 12, 13, 31, 32) connected in parallel between the first and the second DC terminals (21, 22). In each capacitor string (11, 12, 13, 31, 32), at least two capacitors that are connected in series in the capacitor string are provided.

FIG 3

**Description**

FIELD OF THE INVENTION

The present invention relates to a capacitor bank comprising plural capacitors, to a backup power supply system comprising such capacitor bank, to a DC power supply comprising such capacitor bank and to a subsea device.

BACKGROUND

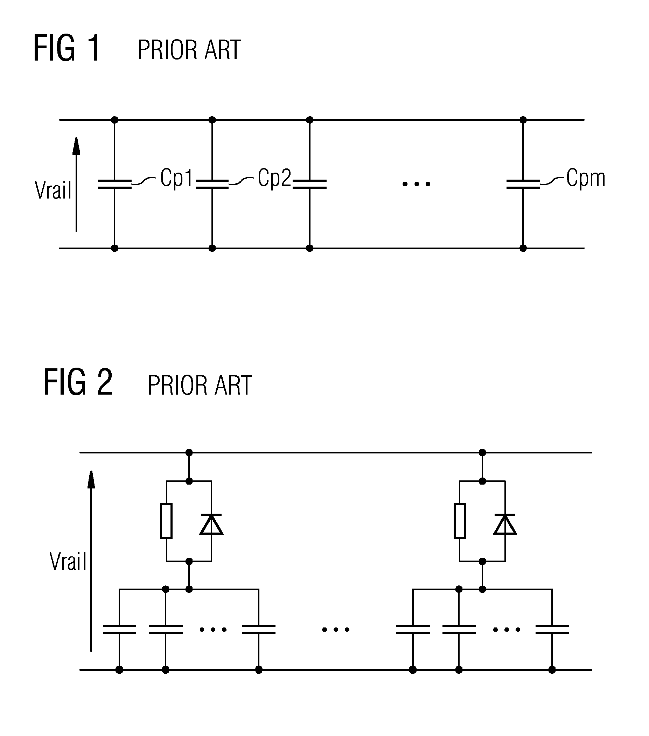

A capacitor bank generally includes a number of single capacitors that are connected in parallel to obtain an intended capacitance, as shown in Figure 1. The capacitors $C_{p1}$ to $C_{pm}$ are connected in parallel between two DC (direct current) rails to which the voltage $V_{rail}$ is applied. When manufacturing such capacitor bank, the handling and the soldering of the capacitors as well as the transportation of a power supply board comprising such capacitor bank may cause a cracking of some of the capacitors. In operation of such capacitor bank, such cracks may lead to short circuiting of the particular capacitors during operation upon being exposed to electrical stress. If a capacitor in the capacitor bank of Figure 1 experiences a short circuit, an increased current will flow through the short circuited capacitor, resulting in heating of the capacitor until the capacitor is essentially "burned", thus interrupting the electrical connection between the DC rails through the capacitor. Although the capacitor bank may continue operation after such burning of a capacitor, it was observed that the burning may become contagious and may destroy the neighboring capacitors as well. The capacitor failure may thus lead to a complete failure of a power supply through the DC rails of the capacitor bank. Further, the capacity of the capacitor bank is reduced.

This problem is dealt with conventionally by refining the handling, soldering and transportation process of the capacitors, in particular by ensuring that none of the capacitors is damaged in the capacitor bank. This increases the effort and cost for manufacturing the capacitor bank and furthermore cannot prevent the above outlined effects in case a short circuit through a capacitor.

Another solution for dealing with such problems is the use of a diode resistor arrangement to which several capacitors are connected in parallel, as shown in Figure 2. By such solution, isolation of the fault is improved. Yet a short circuit provided across one of the capacitors will essentially take the remaining capacitors that are connected in parallel to the same diode resistor arrangement out of the circuit and thus will significantly reduce the capacity of the capacitor bank. Furthermore, current continues to flow through such faulty part of the capacitor bank, which results in heat dissipation and a reduced efficiency of the overall system.

It is desirable to avoid such negative effects and in particular to ensure that a fault in a capacitor does not lead to a reduction of the energy storage capability of the capacitor bank.

SUMMARY

Accordingly, there is a need for obviating at least some of the draw backs mentioned above and to provide an improved capacitor bank.

This need is met by the features of the independent claims. The dependent claims describe embodiments of the invention.

According to an embodiment of the invention, a capacitor bank comprising plural capacitors that are connected in parallel between a first and a second DC terminal is provided. The capacitor bank comprises at least two capacitor strings connected in parallel between the first and the second DC terminals. Each capacitor string comprises at least two capacitors that are connected in series in the capacitors string.

By means of such configuration, several benefits may be achieved. If one of the capacitors in a capacitor string fails, for example by causing a short circuit in the capacitor, the voltage applied to the two DC terminals will immediately be applied to the remaining capacitor(s) in the string, so that the capacitor bank can continue to operate with almost no delay. Furthermore, the capacitor that has failed will not burn, thus reducing the heat generation and furthermore reducing the risk of damaging neighboring capacitors. The power flow to a load will thus not be interrupted. Furthermore, in normal operation, the voltage across each capacitor and thus electrical stresses are less than in a conventional capacitor bank. Accordingly, the component reliability of the capacitors in the capacitor bank may be increased.

Even further, capacitors, in particular ceramic capacitors, generally experience a reduced capacitance upon application of DC voltage, the so called DC-bias effect. By providing several capacitors in series in a string, the voltage drop across each capacitor will be reduced, so that the capacitor operates at a lower DC-bias, resulting in a higher capacitance that can be harnessed of each capacitor. Even further, in such series connection of the capacitances, the reciprocal value of the equivalent capacitance of the string is determined by the sum of the reciprocal values of the capacitances of the individual series connected capacitors. Accordingly, when a capacitor fails and is short circuited the equivalent capacitance of the whole string increases. As a result, the capacitance of the capacitor bank may in certain instances even increase in case of a failure in one of the capacitors. The electrical energy storage capability of the capacitor bank may thus be maintained in case of a fault in one of the capacitors.

The at least two capacitors in each capacitor string may be ceramic capacitors and/or multilayer capacitors. According to an embodiment, the capacitors are multilayer ceramic capacitors (MLCC). The use of such type of capacitor is particularly beneficial in combination with high power electronics. Furthermore, such type of capacitor is particularly prone to the above described failures, so that a capacitor bank comprising this type of capacitor particularly benefits from the above outlined advantages.

In an embodiment, each capacitor has a voltage rating that is larger than the operating voltage that is to be applied to the first and second DC terminals divided by N-1, wherein N denotes the number of capacitors connected in series in the capacitors string. In such configuration, if a capacitor in the capacitor string fails, the voltage drop across each remaining capacitor in the string will be increased. By providing capacitors with such voltage rating, the voltage drop across the remaining capacitors in the string will not exceed the voltage rating. It should be clear that the voltage rating may be chosen even higher for allowing more than one capacitor to fail in the capacitor string without exceeding the rated voltage of the capacitors in the string. Furthermore, by using capacitors of a higher rated voltage, the DC-bias effect may be reduced for the capacitors.

In an embodiment, each capacitor string comprises a series connection of Zener diodes or a resistor divider configured and connected to balance the voltages applied over the at least two series connected capacitors in the string. A voltage imbalance across the capacitors in the same string may occur due to a current leakage. Such voltage imbalance may be reduced or even be prevented by the present embodiment.

In particular, in at least one capacitor string, a resistor or a Zener diode may be connected in parallel with each of the at least two capacitors for balancing the voltage across the respective capacitor. Preferably, this configuration is provided for each capacitor string. An effective balancing of the voltages across the capacitors in the same string may thus be achieved.

In an embodiment, at least one capacitor string, preferably each capacitor string, comprises at least two capacitor clusters connected in series between the first and second DC terminals. Each capacitor cluster may comprise at least two capacitors connected in parallel in the capacitor cluster. By such series connection of capacitor clusters, the total number of capacitors may be reduced.

Each capacitor cluster may further include at least one resistor or Zener diode that is connected in parallel with the at least two capacitors of the capacitor cluster. Accordingly, in such configuration, a balancing of the voltages across the capacitor clusters in the same capacitor string may be achieved.

The resistors that are connected parallel to the capacitors or to the capacitor clusters may have the same resistance value.

In an embodiment, the capacitance of the capacitor bank is at least 15 $\mu$F, preferably at least 100 $\mu$F. It should be clear that the capacitance of the capacitor bank may be adjusted by adding further capacitor strings, and may be adapted to the particular application in which the capacitor bank is to be used.

In an embodiment, the capacitor bank may comprise at least five capacitor strings. It should be clear that the capacitor bank may comprise further capacitor strings for increasing the total capacitance of the capacitor bank.

As an example, the capacitor bank may comprise at least 50 individual capacitors. As outlined above, in dependence on the total capacitance and the number of capacitor strings, as well as the number of capacitors connected in series in each capacitor string, the total number of capacitors may be significantly higher than 50 capacitors.

A capacitor bank is generally a grouping of several capacitors, for example in a parallel connection. The capacitors of the capacitor bank may be of the same type and may have the same nominal values, such as voltage rating and capacitance. The capacitors of the capacitor bank may be substantially identical. In other embodiments, the capacitor bank may also comprise capacitors of different types and/or nominal values.

According to a further embodiment of the present invention, a backup power supply system for providing backup electrical power is provided. The backup power supply system may for example be provided in a subsea device, or may supply electrical power to a subsea device, for ensuring reliable operation of such subsea device even in case of a power black-out. The backup power supply system comprises a capacitor bank that may be configured in accordance with any of the above outlined embodiments.

According to a further embodiment of the invention, a DC power supply comprising a capacitor bank having any of the above outlined configurations is provided. The capacitor bank may be connected between the DC terminals at the input or the output of the DC power supply, i.e. the capacitor bank may be an input or output capacitor bank for the DC power supply.

By providing the backup power supply system or the DC power supply with embodiments of the capacitor bank, advantages similar to the ones outlined further above may be achieved.

According to a further embodiment of the present invention, a subsea device comprising a capacitor bank in any of the above outlined configurations is provided. The subsea device may additionally or alternatively comprise the backup power supply system or the DC power supply mentioned above.

It is to be understood that the features mentioned above and those yet to be explained below can be used not only in the respective combinations indicated, but also in other combinations or in isolation without leaving the scope of the present invention.

BRIEF DESCRIPTION OF THE DRAWINGS

The foregoing and other features and advantages of the invention will become further apparent from the following detailed description read in conjunction with the accompanying drawings. In the drawings, like reference numerals refer to like elements.

Figure 1     is a schematic diagram showing a capacitor bank.

Figure 2     is a schematic diagram showing a capacitor bank.

Figure 3     is a schematic diagram showing a capacitor bank according to an embodiment of the invention.

Figure 4     is a schematic diagram showing a capacitor bank according to a further embodiment of the invention.

Figure 5     is a schematic diagram showing a capacitor bank according to a further embodiment of the invention.

DETAILED DESCRIPTION

In the following, embodiments of the invention are described in detail with reference to the accompanying drawings. It is to be understood that the following description of the embodiments is given only for the purpose of illustration and is not to be taken in a limiting sense. It should be noted that the drawings are to be regarded as being schematic representations only. Also, the coupling of physical or functional units as shown in the drawings and described hereinafter does not necessarily need to be a direct connection or coupling, but may also be an indirect connection or coupling, i.e. a connection or coupling with one or more additional intervening elements. Furthermore, one or more physical or functional blocks or units may be implemented in a common circuit, circuit element or unit, while other physical or functional blocks or units may be implemented in separate circuits, circuit elements or units.

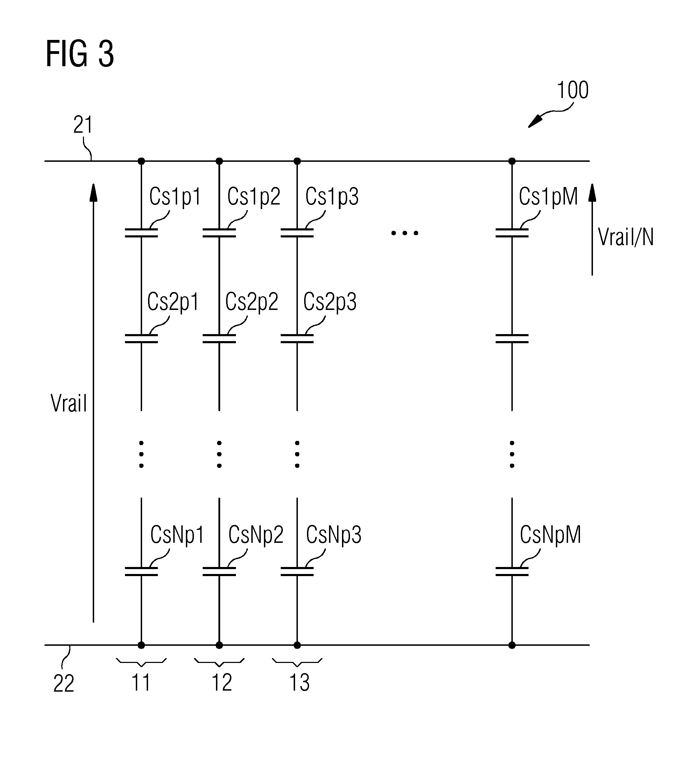

Figure 3 illustrates a capacitor bank according to an embodiment of the invention. The capacitor bank 100 includes the DC terminals 21 and 22, between which M capacitor strings 11, 12, 13 are connected in parallel. Each of the capacitor strings 11, 12, 13, ... comprises N individual capacitors $C_{sNpM}$. In operation of the capacitor bank 100, the voltage across the DC terminals 21, 22 is $V_{rail}$.

As can be seen in the example of Figure 3, when one of the capacitors $C_{sNpM}$ experiences a fault, in particular a short circuit, the other capacitors of the respective string immediately take over the voltage across the rail, thus preventing the occurrence of high currents through the faulty capacitor. The voltage drop across the remaining capacitors in the string increases. In the embodiment of Figure 3, capacitors with a rated voltage that is determined as follows are used in the capacitor bank 100:

$$V_{rated} > \frac{V_{rail}}{N-1} \qquad (1)$$

wherein N denotes the number of series connected capacitors in the respective string. Accordingly, the capacitors in the string can handle the voltage increase. It should be clear that capacitors with a higher voltage rating can be used to account for a potential loss of more than one capacitor in the capacitor string.

In order to counteract possible voltage imbalances across the capacitors in the same capacitor string, which may be caused by current leakage, the capacitor bank 100 may be provided with a resistor divider, or Zener diodes may be placed in each of the capacitor strings 11, 12, 13, .... This will be explained in more detail below with respect to further embodiments.

The electrical energy that can be stored in the capacitor bank 100 may be determined as follows:

$$E = \frac{1}{2} C * V^2 \qquad (2)$$

wherein C denotes the total equivalent capacitance of the capacitor bank and V denotes the voltage. In a conventional capacitor bank, if there is a failure in one capacitor, the total capacitance C of the capacitor bank is reduced, thus leading to a loss of electrical energy storing capability of the capacitor bank. In the present embodiment, the capacitance of each capacitor string 11, 12, 13, ... is determined as follows:

$$\frac{1}{C} = \frac{1}{C_1} + \frac{1}{C_2} + \frac{1}{C_3} + ... + \frac{1}{C_N} \qquad (3)$$

As can be seen from the above, the capacitance of the capacitor string is increased if a short circuit occurs in one of the capacitors, so that the capacitance of the capacitor bank 100 may even be increased upon failure of one capacitor.

Preferably, the capacitors in the capacitor bank are multilayer ceramic capacitors (MLCC). Such capacitors experience several effects: if the capacitor is operated at the maximum rated voltage, the capacitance generally drops below the nominal value. Accordingly, at a lower fraction of the maximum voltage rating, the full capacitance of the capacitor is available. By providing a series connection of such capacitors in each string, the capacitance available for storing electrical energy may thus be increased. Furthermore, such capacitors experience a DC-bias effect, which means that the application of a DC-bias voltage reduces the capacitance of the capacitor with increasing DC-bias. Accordingly, when one of the capacitors in a capacitor string fails and the voltage drop across the remaining capacitors is increased, the available capacitance of each individual capacitor is generally reduced. This effect is countered and may even be overcompensated by the above mentioned effect according to which a reduced number of capacitors leads to an overall increased capacitance of the series connection of each capacitor string. Upon failure of one capacitor, the total available capacitance of a capacitor string 11, 12, 13 may thus remain substantially constant or may even increase, although it should be clear that in certain configurations, it might also be reduced.

Embodiments of the present invention may comprise more capacitors than a conventional capacitor bank having the same nominal capacitance. In the following, it is explained on a specific example how the total number of capacitors may need to be increased in embodiments of the invention.

As a specific example, a DC power supply providing DC power of 110 V DC and requiring an output capacitance of about 130 $\mu$F is chosen. The voltage between the DC terminals, i.e. the rail voltage $V_{rail}$ is thus 110 V. As an example, type II MLCC capacitors having a rated voltage of 250 V and a capacity of 3.3 $\mu$F are used. Accordingly, in a conventional capacitor bank (see Figure 1), the voltage drop across each capacitor in operation is about 45 per cent of the rated voltage. Due to the properties of the MLCC capacitors, the capacitance will drop about 50% when operated in such way. As a result, the number of required capacitors in such conventional capacitor bank is

$$\frac{132\ \mu F}{3.3 \times (0,5)\mu F} = 80\ \text{capacitors} \quad (4)$$

Accordingly, based on the above requirements, a conventional capacitor bank would make use of about 80 capacitors. For a capacitor bank according to an embodiment of the invention, in which two capacitors are connected in series in each capacitor string, one may now expect that the number of capacitors would need to be increased by a factor of four (due to the increase in the number of capacitors in each string and the resulting reduced capacitance of each string, requiring twice as many strings as capacitors are required in the conventional solution). Nevertheless, the following considerations show that the number of capacitors required in such embodiment can be reduced. By providing two capacitors in each string, the voltage drop across each capacitor is only about 55 V DC. Accordingly, the DC-bias for each capacitor is lower, resulting in an increased available capacitance for each capacitor. The capacitance of each capacitor is thus only reduced by about 20% compared to the nominal capacitance. Accordingly, based on the same type of capacitor (3.3 $\mu$F, 250 V type II MLCC capacitor), the required number of capacitors in such configuration can be calculated as follows:

$$2 \times \frac{132\ \mu F}{\frac{3.3}{2}\times (0.8)\ \mu F} = 200\ \text{capacitors} \qquad (5)$$

As can be seen, the number of capacitors has to be increased only by a factor of 2.5, and not by a factor of 4, as it is expected. Accordingly, it is possible to produce the capacitor bank according to embodiments in an effective and cost efficient manner.

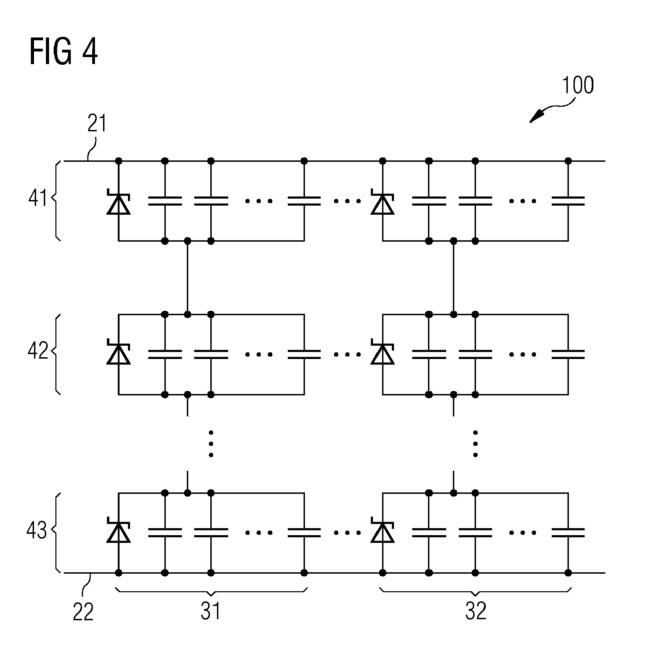

Figure 4 illustrates a further embodiment of a capacitor bank 100 according to an embodiment. The embodiment of Figure 4 is a modification of the embodiment of Figure 3, so the explanations given above also apply to the embodiment of Figure 4 with the necessary changes. In the embodiment of Figure 4, capacitor strings 31, 32, ... are provided. Each capacitor string 31, 32, ... comprises two or more capacitor clusters 41, 42, 43, .... In each capacitor cluster 41, 42, 43, two or more capacitors are connected in parallel. In such configuration, the capacitance of each capacitor string 31, 32, ... can be increased, thus requiring fewer capacitor strings for achieving a desired total capacitance of the capacitor bank 100. Accordingly, in such configuration, the increase in the number of capacitors that are required compared with conventional capacitor banks may be limited. Furthermore, in the example of Figure 4, a Zener diode is connected in parallel with the capacitors of each capacitor cluster 41, 42, 43, .... In this way, the voltage across each capacitor cluster can be kept balanced. The Zener diode may be connected in a similar way in the embodiment of Figure 3 across each capacitor in a capacitor string.

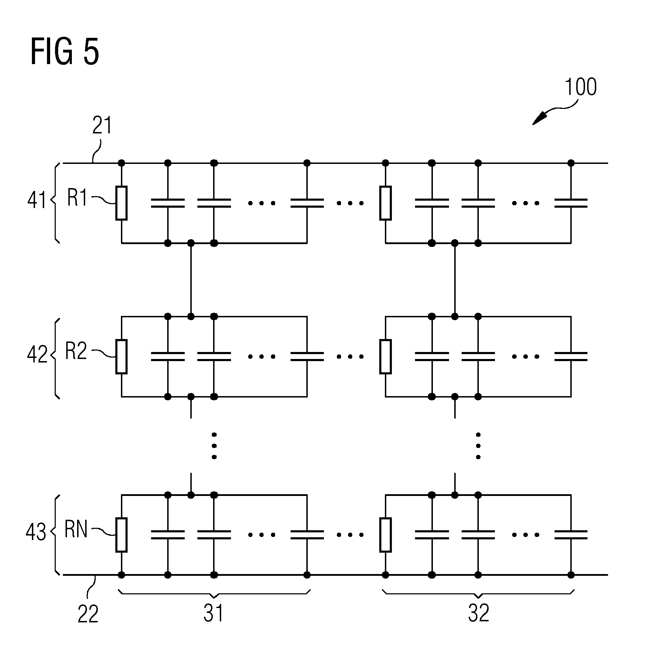

A further embodiment of the capacitor bank 100 is illustrated in Figure 5. Figure 5 shows a modification of the embodiment of Figure 4, so that the explanations given above are equally applicable. In the embodiment of Figure 5, resistors R1, R2, ... RN are connected in parallel with the capacitors of each capacitor cluster 41, 42, 43 instead of the Zener diodes of Figure 4. Accordingly, by providing such resistor divider for each capacitor string 31, 32, ..., the voltage drop across each capacitor cluster can be balanced in operation. Similarly, such resistor divider may also be used with the embodiment of Figure 3 for each of the capacitor strings.

As can be seen from the above, embodiments of the present invention may provide several advantages. If there is a fault in a capacitor of the capacitor bank, the flow of electric power to a load will not be interrupted, since there is no short circuit current flowing between the two DC terminals through the faulty capacitor. Furthermore, the voltage drop across each individual capacitor is reduced in normal operation, thus leading to a reduced electrical stress. The component reliability may thus be increased. Furthermore, since the individual capacitors operate at a lower voltage than the rated voltage in normal operation, the DC-bias effect that generally reduces the available capacitors of each capacitor is not so pronounced, so that a higher capacitance can be harnessed from each individual capacitor in normal operation.

Even further, and as outlined above in more detail, if a capacitor of the capacitor bank fails, the total capacitance of the capacitor bank may remain constant or may even be increased. This may be particularly advantageous for energy storage solutions. Accordingly, in environments such as in a subsea environment where it is difficult to service or to exchange components, such capacitor bank may be operated reliably with a relatively constant available storage capacity even if individual capacitors fail. This is in stark contrast to conventional capacitor banks in which the failure of a capacitor generally leads to a reduced capacity of the capacitor bank. As a consequence, embodiments may increase the total product reliability irrespective of the individual component reliability, i.e. the reliability of the individual capacitors. Capacitors can generally be considered to constitute a weak link in subsea applications, due to their individual reliability, which drawback may be circumvented by embodiments of the present invention.

While specific embodiments are disclosed herein, various changes and modifications can be made without departing from the scope of the invention. The present embodiments are to be considered in all respects as illustrative and non-restrictive, and all changes coming the meaning and equivalency range of the appended claims are intended to be embraced therein.

**Claims**

1. A capacitor bank comprising plural capacitors that are connected in parallel between a first DC terminal (21) and a second DC terminal (22), **characterized in that** the capacitor bank (100) comprises

   - at least two capacitor strings (11, 12, 13, 31, 32) connected in parallel between the first and the second DC terminals (21, 22),

   wherein each capacitor string (11, 12, 13, 31, 32) comprises at least two capacitors that are connected in series in the capacitor string (11, 12, 13, 31, 32).

2. The capacitor bank according to claim 1, wherein the capacitors are ceramic capacitors and/or multilayer capacitor, and preferably are multilayer ceramic capacitors (MLCC).

3. The capacitor bank according to claim 1 or 2, wherein each capacitor has a voltage rating that is larger than the operating voltage that is to be applied to the first and second DC terminals (21, 22) divided by N-1, wherein N denotes the number of capacitors connected in series in the respective capacitor string (11, 12, 13, 31, 32).

4. The capacitor bank according to any of the preceding claims, wherein each capacitor string comprises a series connection of Zener diodes or a resistor divider configured and connected to balance the voltages applied over the at least two series connected capacitors in the capacitor string (11, 12, 13, 31, 32).

5. The capacitor bank according to any of the preceding claims, wherein in at least one capacitor string (11, 12, 13, 31, 32), preferably each capacitor string, a resistor (R1, R2, ...) or a Zener diode is connected in parallel to each of the at least two capacitors for balancing the voltage across the respective capacitor.

6. The capacitor bank according to any of the preceding claims, wherein at least one capacitor string (31, 32), preferably each capacitor string, comprises at least two capacitor clusters (41, 42) connected in series between the first and second DC terminals (21, 22), wherein each capacitor cluster (41, 42) comprises at least two capacitors connected in parallel in the capacitor cluster (41, 42).

7. The capacitor bank according to claim 6, wherein each capacitor cluster (41, 42) further includes at least one resistor (R1, R2) or Zener diode that is connected in parallel with the at least two capacitors of the capacitor cluster (41, 42).

8. The capacitor bank according to any of the preceding claims, wherein the capacitance of the capacitor bank (100) is at least 50 microfarad, preferably at least 100 microfarad.

9. The capacitor bank according to any of the preceding claims, wherein the capacitor bank (100) comprises at least 5 capacitor strings (11, 12, 13, 31, 32).

10. The capacitor bank according to any of the preceding claims, wherein the capacitor bank (100) comprises at least 50 capacitors.

11. A backup power supply system for providing backup electrical power, in particular to a subsea device, comprising a capacitor bank (100) according to any of the preceding claims.

12. A DC power supply comprising a capacitor bank (100) according to any of claims 1-10.

13. The DC power supply according to claim 12, wherein the capacitor bank (100) is connected between the DC terminals at the input or the output of the DC power supply.

14. A subsea device comprising a capacitor bank (100) according to any of claims 1-10, a backup power supply system according to claim 11 or a DC power supply according to claim 12 or 13.

**FIG 1**   PRIOR ART

Vrail

Cp1   Cp2   ...   Cpm

**FIG 2**   PRIOR ART

Vrail

FIG 3

FIG 4

FIG 5

Europäisches
Patentamt

European
Patent Office

Office européen
des brevets

**EUROPEAN SEARCH REPORT**

Application Number

EP 15 17 6817

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 172 916 A2 (TOSHIBA KK [JP]) 16 January 2002 (2002-01-16) * paragraph [0022] - paragraph [0023]; figures 1-3 * | 1-14 | INV. H02M5/45 H01G4/38 H02J7/34 |
| X | WO 92/20082 A1 (ASEA BROWN BOVERI [SE]) 12 November 1992 (1992-11-12) * abstract; figure 3 * | 1 | |
| A | EP 1 475 882 A2 (TOSHIBA INT CORP [US]) 10 November 2004 (2004-11-10) * abstract; figures 3,4 * | 1-14 | |

TECHNICAL FIELDS
SEARCHED          (IPC)

H02M
H01G
H02J

The present search report has been drawn up for all claims

| Place of search | Date of completion of the search | Examiner |
|---|---|---|
| The Hague | 11 January 2016 | Gentili, Luigi |

EPO FORM 1503 03.82 (P04C01)

**ANNEX TO THE EUROPEAN SEARCH REPORT
ON EUROPEAN PATENT APPLICATION NO.**                    EP 15 17 6817

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2016

| Patent document cited in search report | | Publication date | Patent family member(s) | | Publication date |
|---|---|---|---|---|---|
| EP 1172916 | A2 | 16-01-2002 | EP | 1172916 A2 | 16-01-2002 |
|  |  |  | JP | 2002034179 A | 31-01-2002 |
|  |  |  | US | 2002017822 A1 | 14-02-2002 |
| WO 9220082 | A1 | 12-11-1992 | CA | 2108668 A1 | 25-10-1992 |
|  |  |  | DE | 69213001 D1 | 26-09-1996 |
|  |  |  | DE | 69213001 T2 | 03-04-1997 |
|  |  |  | EP | 0583248 A1 | 23-02-1994 |
|  |  |  | ES | 2093253 T3 | 16-12-1996 |
|  |  |  | FI | 934689 A | 22-10-1993 |
|  |  |  | SE | 469303 B | 14-06-1993 |
|  |  |  | US | 5475272 A | 12-12-1995 |
|  |  |  | WO | 9220082 A1 | 12-11-1992 |
| EP 1475882 | A2 | 10-11-2004 | EP | 1475882 A2 | 10-11-2004 |
|  |  |  | US | 2004223346 A1 | 11-11-2004 |

EPO FORM P0459

For more details about this annex : see Official Journal of the European Patent Office, No. 12/82